# EUROPEAN PATENT APPLICATION

(11) **EP 1 753 234 A2**
(43) Date of publication of application: **14.02.2007**
(21) Application number: 06118179.8
(22) Date of filing: 31.07.2006
(51) Int. Cl.: H04N 5/445

(54) **Apparatus and method for displaying channel informations**

(30) Priority: 01.08.2005 KR 20050070293
(71) Applicant: Samsung Electronics Co., Ltd., Suwon-si, Gyeonggi-Do (KR)
(72) Inventor: CHOI, Jung-hwa, Seoul (KR); JOO, Kyung-sub, Gyeonggi-do (KR); SEO, Young-joo, Sinnamusil Apt. 622-1701, Gyeonggi-do (KR)
(74) Representative: Clark, Charles Robert

(57) **Abstract**

A broadcast signal receiver and a channel information displaying method of the broadcast signal receiver are provided for displaying channel information in a channel information menu in which broadcast channels comprising broadcast signals are classified into information regarding viewable channels and non-viewable channels separately displayed. Broadcast channels comprising broadcast signals are searched. A viewable channel authorized for viewing and a non-viewable channel not authorized for viewing, among the searched broadcast channels are classified. A channel information menu is displayed comprising a first display block displaying information regarding the viewable channel and a second display block displaying information regarding the non-viewable channel.

## Description

The present invention relates to a broadcast signal receiver and a method for displaying channel information of the same. More particularly, the present invention relates to a broadcast signal receiver and a method for displaying channel information, where a channel information menu classifies viewable channels and non-viewable channels among broadcast channels comprising broadcast signals.

In general, a terrestrial broadcast, cable broadcast, and satellite broadcast transmit an image signal and a sound signal, information regarding a channel comprising a broadcast signal and additional information regarding a program provided through corresponding channels. The additional information comprises, for example, Electronic Program Guide (EPG) information.

A broadcast signal receiver, such as, a television (TV) and a Set-Top Box, provides a user with information regarding the channels comprising broadcast signals, and the additional information regarding a program provided by each channel, by displaying the information in a channel information menu based on the EPG information.

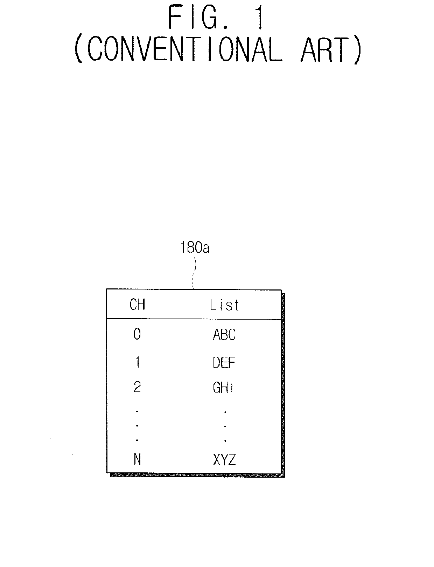

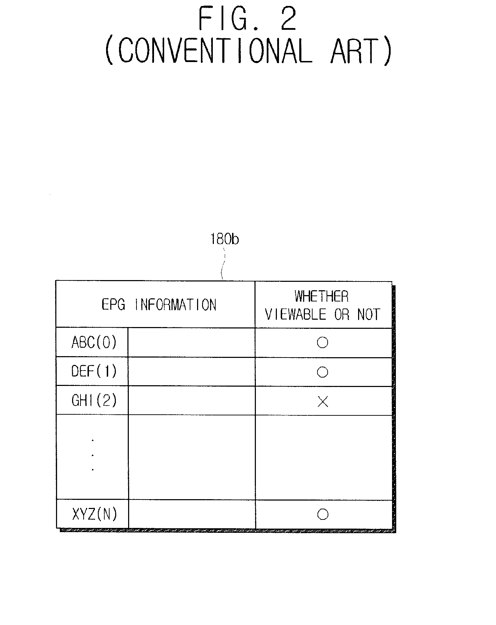

Figure 1 and Figure 2 are drawings illustrating the channel information menus 180a and 180b provided in a conventional broadcast signal receiver. As illustrated in the drawings, the conventional broadcast signal receiver searches the channels comprising the broadcast signal, among all channels, and provides a list of the searched channels together with information corresponding to the channels.

However, in the conventional broadcast signal receiver, the channels comprising the broadcast signal are listed and displayed in the channel information menus 180a and 180b in a predetermined order, such as, channel number order. In this instance, channels that do not comprise a normal broadcast signal, such as, channels having only band energy without a normal broadcast signal and scrambled channels for which a user does not have authority to view, are also included and displayed in the channel list. As a result, the user may have difficulties searching the channels authorized for viewing.

An aspect of embodiments of the present invention is to address at least the above problems and/or disadvantages and to provide at least the advantages described below. Accordingly, an aspect of embodiments of the present invention is to provide a broadcast signal receiver and a method for displaying channel information of the same, capable of providing a channel information menu in which the broadcast channels comprising broadcast signals are classified into information regarding viewable channels and non-viewable channels, which are separately displayed.

Therefore, a user can readily search the viewable channels when the broadcast channels, comprising the broadcast signal, are classified into viewable channels, authorized for viewing, and non-viewable channels, not authorized for viewing, and then displayed separately in the channel information menu.

The foregoing and/or other aspects of embodiments of the present invention can be achieved by providing a channel information displaying method of a broadcast signal receiver where broadcast channels comprising broadcast signals are searched, a viewable channel authorized for viewing and a non-viewable channel not authorized for viewing are classified among the searched broadcast channels, and a channel information menu is displayed in which a first display block displays information on the viewable channel and a second display block displays information on the non-viewable channel.

According to an aspect of an embodiment the present invention, the classifying of the viewable channels and the non-viewable channel comprise determining whether the broadcast signals received through the respective broadcast channels are capable of being decoded. A channel, among the broadcast channels, comprising the broadcast signal capable of being decoded is classified as the viewable channel. A channel comprising the broadcast signal incapable of being decoded is classified as the non-viewable channel.

According to an aspect of an embodiment of the present invention, band energy of each channel is detected. The channel in which the band energy is detected is determined as the broadcast channel.

According to an aspect of an embodiment of the present invention, information regarding a changing procedure for changing the non-viewable channel to the viewable channel is displayed in the second display block.

According to an aspect of an embodiment of the present invention, the information regarding the changing procedure for changing the non-viewable channel to the viewable channel is provided from Electronic Program Guide information.

According to an aspect of an embodiment of the present invention, at least one of the viewable channels displayed in the channel information menu is selected. The channel is changed into the selected viewable channel.

The foregoing and/or another aspects of embodiments of the present invention can be achieved by providing a broadcast receiver that comprises a UI generating unit, where a controller searches broadcast channels comprising broadcast signals, a viewable channel and a non-viewable channel are classified among the searched broadcast channels, and the UI generating unit is controlled to generate a channel information menu. The channel information menu comprises a first display block displaying information regarding the viewable channel and a second display block displaying information regarding the non-viewable channel.

According to an aspect of an embodiment of the present invention, the controller comprises a decoder decoding the broadcast signal of the broadcast channel. A microcomputer classifies, among the broadcast channels, a channel as the viewable channel comprising the broadcast signal capable of being decoded by the decoder and a channel as the non-viewable channel comprising the broadcast signal incapable of being decoded by the decoder.

According to an aspect of an embodiment of the present invention, a channel demodulator detects whether band energy exists in each channel and the channel in which the band energy is detected is searched as the broadcast channel.

According to an aspect of an embodiment of the present invention, an identifying unit identifies whether the broadcast channel is permitted for viewing, wherein the controller receives information regarding the broadcast channel from the identifying unit.

According to an aspect of an embodiment of the present invention, the controller controls the UI generating unit to display information in the second display block, based on EPG information, regarding a changing procedure for changing the non-viewable channel to the viewable channel.

According to an aspect of an embodiment of the present invention, a user input unit selects at least one of the viewable channels displayed in the channel information menu, wherein the controller changes a channel into the selected viewable channel through the user input unit.

Embodiments of the present invention are now described, by way of example, and in conjunction with the accompanying drawings, of which:
Figure 1 and Figure 2 are drawings illustrating examples of a channel information menu provided from a conventional broadcast receiver;
Figure 3 is a schematic control block diagram of a broadcast signal receiver according to an embodiment of the present invention;
Figure 4 is a drawing illustrating an exemplary configuration of a controller in the broadcast signal receiver of Figure 3;
Figure 5 is a drawing illustrating an example of a channel information menu provided from the broadcast signal receiver according to an embodiment of the present invention;
Figure 6 is a control flowchart for describing a method for displaying channel information of the broadcast signal receiver according to an embodiment of the present invention.

Throughout the drawings, the same drawing reference numerals will be understood to refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

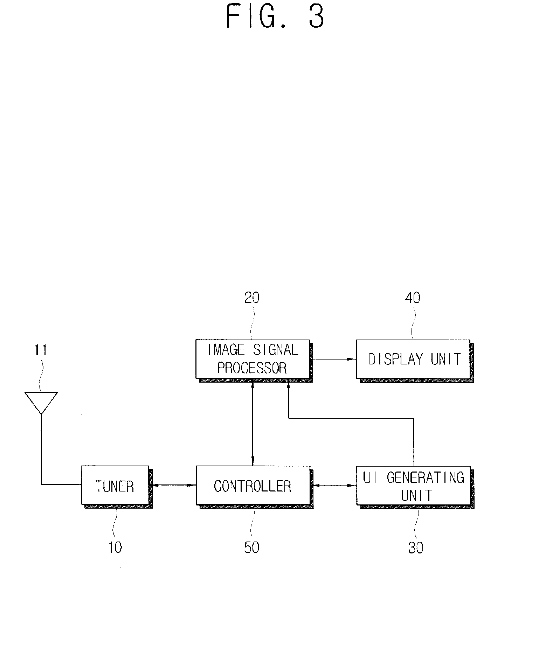

As illustrated in Figure 3, a broadcast signal receiver, according to an embodiment of the present invention, comprises a tuner 10, image signal processor 20, user interface (UI) generating unit 30 and controller 50. The broadcast signal receiver may further comprise a display unit 40 in which an image signal from the image signal processor 20 may be displayed as an image.

The image signal transformed by the image signal processor 20 is applied to the display unit 40 to be displayed as the image on a screen. The display unit 40 may be one of a cathode ray tube (CRT), liquid crystal display (LCD) plasma display panel (PDP), or any type of display that can display an image.

The image signal processor 20 transforms the image signal applied from the controller 50 into a format such as a digital RGB signal capable of displaying the image in the display unit 40, and then outputs the image to the display unit 40. The image signal processor 20 may transform the image signal from the controller 50 to adjust a vertical frequency, resolution, and picture ratio, which corresponds to an output standard of the display unit 40.

The UI generating unit 30 displays a channel information menu 80 on the display unit 40 according to control of the controller 50. The image signal for generating the channel information menu 80 output from the UI generating unit 30 is displayed on the screen of the display unit 40 through the image signal processor 20.

The tuner 10 tunes the broadcast signal received through an antenna 11 to a channel having the corresponding frequency band according to a tuning control signal of the controller 50. The broadcast signal of the tuned channel is received in packet form of at least one of a transport stream, which is time-divided and multiplexed, video signal, audio signal and other various data.

The controller 50 transforms the broadcast signal provided on a selected channel by the tuner 10 into a format which the image signal processor 20 can process and then output.

Also, the controller 50 searches a channel having the broadcast signal (referred to herein as a broadcast channel) among channels received through the tuner 10. The controller 50 then classifies the channels among the searched broadcast channels received through the tuner 10 as viewable channels, which are authorized for viewing and non-viewable channels, which are not authorized for viewing.

The controller 50 controls the UI generating unit 30 to display the channel information menu 80 on the display unit 40. The channel information menu 80 comprises a first display block 81 displaying information regarding the viewable channels, and a second display block 82 displaying information regarding the non-viewable channels. The broadcast signals comprised in the channels are classified into the viewable channels, capable of normally viewing, and the non-viewable channels. The classified channels are then provided to a user. Accordingly, the user can more readily search the viewable channels capable of normally viewing.

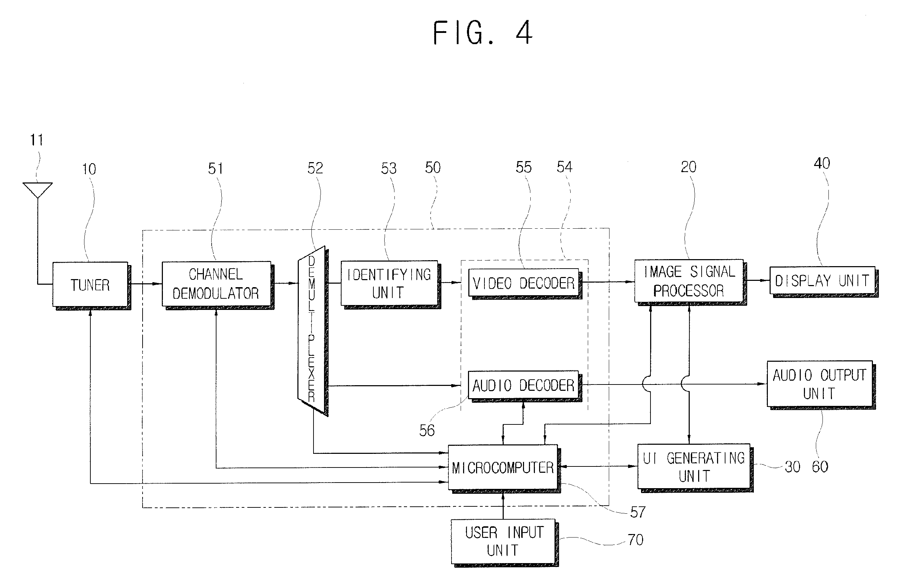

As described below, the broadcast signal receiver, according to an embodiment of the present invention, is explained in more detail by referring to Figure 4. The reference numerals referred to in Figure 4 are the same elements as illustrated in Figure 3. Therefore, an explanation of the reference numerals is omitted for clarity and conciseness.

The controller 50, according to an exemplary embodiment of the present invention, may comprise a channel demodulator 51, demultiplexer 52, identifying unit 53, decoder 54 and microcomputer (MICOM) 57.

The channel demodulator 51 outputs the broadcast signal comprised in a specific channel selected by the tuner 10 in the form of a transport stream through a demodulation process and an error correction process. The demultiplexer 52 separates the broadcast signal of the transport stream output from the channel demodulator 51 into a video stream, audio stream and data stream. The demultiplexer 52 then outputs the video stream, audio stream and data stream.

The video stream separated in the demultiplexer 52 is decoded by a video decoder 55, such as, a MPEG decoder, comprised in decoder 54, and is input to the image signal processor 20. Also, the audio stream separated in the demultiplexer 52 is decoded by an audio decoder 56 comprised in the decoder 54 and is output through an audio output unit 60 comprising a speaker.

Also, various data streams, separated in the demultiplexer 52, are parsed by a parsing unit (not shown) and then separately stored in a memory (not shown) according to each data table. The data stream being transmitted may comprise the Electronic Program Guide (EPG) information.

The identifying unit 53 identifies whether the user has an authority, which permits viewing of the broadcast signal comprised in the broadcast channel. For example, if the channel including the broadcast signal, which is scrambled, is authorized for the present user to view, the identifying unit 53 descrambles the corresponding broadcast signal.

On the other hand, the MICOM 57 searches the broadcast channels comprising the broadcast signal. The MICOM 57 controls the channel demodulator 51 to detect whether band energy exists in each channel. If band energy exists, the MICOM 57 receives information regarding the channel as the broadcast channel, which comprises the band energy from the channel demodulator 51 and may search the channel.

Furthermore, the MICOM 57, may receive information regarding the broadcast channel from the identifying unit 53. In this instance, a broadcast provider may transmit all channels and programs provided, such as a viewable channel and non-viewable channel, or a scrambled channel and corresponding programs including various information corresponding thereto.

Among the detected broadcast channels, the MICOM 57 classifies the viewable channels and the non-viewable channels according to the above described method. The MICOM 57 also classifies the viewable channels and the non-viewable channels based on whether the decoder 54 can decode the broadcast signal of each detected broadcast channel. In other words, the MICOM 57 classifies channels, among the broadcast channels, comprising the broadcast signals capable of being decoded by the decoder 54 as the viewable channels, and channels, among the broadcast channels, comprising the broadcast signal incapable of being decoded by the decoder 54 as the non-viewable channels.

Also, when the user selects a display of the channel information menu 80 through an operation of a user input unit 70, the MICOM 57 controls the UI generating unit 30 to display the channel information menu 80. The channel information menu 80 comprises the first display block 81 displaying information on the viewable channels and the second display block 82 displaying information on the non-viewable channels on display through the display unit 40.

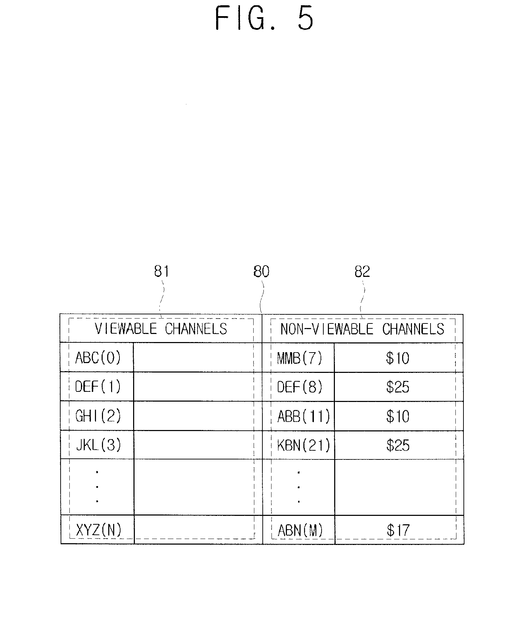

Figure 5 is a drawing illustrating a channel information menu 80 provided through a broadcast signal receiver according to an embodiment of the present invention.

As illustrated in the drawing, the first display block 81 displaying a list of the viewable channels and program information of each viewable channel is provided in the channel information menu 80. The program information of each viewable channel is generated based on EPG information, and may comprise content and time information of the corresponding program.

Also, a list of the non-viewable channels is displayed in the second display block 82 of the channel information menu 80. Information regarding a changing procedure for changing the non-viewable channels to the viewable channels may be displayed in the second display block 82. For example, the non-viewable channel, such as, a scramble channel corresponds to a payable channel in which an additional cost is required for viewing. Information regarding the additional cost for viewing the non-viewable channel may be displayed in the second display block 82. Also, when the viewable channels are determined according to a viewing grade of a present user, information regarding the viewing grade may correspond to the non-viewable channels and then displayed. For instance, information regarding the changing procedure for changing the non-viewable channels to the viewable channels may be provided in the EPG information.

On the other hand, when the user selects one of the viewable channels displayed in the first display block 81 of the channel information menu 80 through the user input unit 70, the MICOM 57 may control the tuner 10 to change a channel into the selected viewable channel. Accordingly, the user uses the channel list of viewable channels displayed in the channel information menu 80 to readily confirm and change the channel capable of viewing.

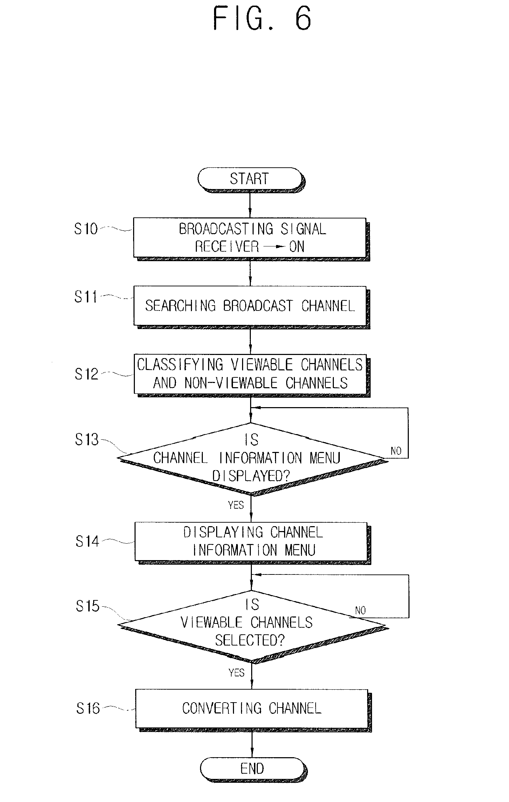

Referring to Figure 6, a method for displaying channel information of a broadcast signal receiver according to an embodiment of the present invention is described.

After a broadcast signal receiver is turned-on at operation S10, a controller 50 searches a broadcast channel among received channels through a tuner 10 at operation S11. The controller 50 classifies the searched broadcast channels into viewable channels and non-viewable channels at operation S12. A searching procedure and classifying procedure of the viewable channels and the non-viewable channels is controlled by the controller 50.

When the user selects to display a channel information menu 80 through an operation of a user input unit 70 at operation S13, the controller 50 controls a UI generating unit 30 to display the channel information menu 80 as illustrated in Fig. 5 on a display unit 40 at operation S14.

When the user selects at least one of the viewable channels provided in the channel information menu 80 through the user input unit 70 at operation S15, the controller 50 controls the tuner 10 to change the channel into the selected viewable channel. As described above, the broadcast signal receiver comprises one of a digital TV or a Set-Top Box. When the broadcast signal receiver, comprises the Set-Top Box, the display unit 40, as illustrated in Figure 3 and Figure 4, may not be implemented in configuration elements of the broadcast signal receiver. Also, the display unit 40 may comprise an additional output unit capable of outputting the broadcast signal processed in a display device, such as, the TV.

While the invention has been shown and described with reference to certain embodiments thereof, it will be understood by those skilled in the art that various changes in form and details may be made therein without departing from the scope of the invention as defined by the appended claims.

## Claims

1. A channel information displaying method of a broadcast signal receiver, the method comprising:
searching broadcast channels comprising broadcast signals;
classifying, among the searched broadcast channels, a viewable channel authorized for viewing and a non-viewable channel unauthorized for viewing; and
displaying a channel menu comprising a first display block showing data regarding the viewable channel and a second display block showing data regarding the non-viewable channel.

2. The method according to claim 1, wherein the classifying of the viewable channel and the non-viewable channel comprises:
determining whether the broadcast signals received through the respective broadcast channels are capable of being decoded;
classifying, among the broadcast channels, a channel comprising the broadcast signal capable of being decoded as the viewable channel; and
classifying, among the broadcast channels, a channel comprising the broadcast signal incapable of being decoded as the non-viewable channel.

3. The method according to claim 2, wherein the searching of the broadcast channels comprises detecting a band energy of each of the broadcast channels, and
determining the channel comprising the detected band energy as the broadcast channel.

4. The method according to claim 2, wherein the displaying of the channel information menu comprises showing data in the second display block regarding a changing procedure for changing the non-viewable channel to the viewable channel.

5. The method according to claim 4, wherein the data regarding the changing procedure is provided from Electronic Program Guide (EPG) information.

6. The method according to any preceeding claim, further comprising:
selecting at least one of the viewable channels displayed in the channel information menu; and
changing the channel into the selected viewable channel.

7. A broadcast signal receiver, comprising:
a user interface (UI) generating unit; and
a controller for searching broadcast channels comprising broadcast signals, and being arranged to classify, among the searched broadcast channels, a viewable channel and a non-viewable channel, and being arranged to control the UI generating unit to generate a channel information menu,
wherein the channel information menu comprises a first display block for showing data regarding the viewable channel and a second display block for showing data regarding the non-viewable channel.

8. The broadcast signal receiver according to claim 7, wherein the controller comprises:
a decoder for decoding the broadcast signals of the broadcast channels;
a microcomputer for classifying, among the broadcast channels, a channel comprising the broadcast signal capable of being decoded by the decoder as the viewable channel, and for classifying a channel comprising the broadcast signal incapable of being decoded by the decoder as the non-viewable channel.

9. The broadcast signal receiver according to claim 8, wherein the controller further comprises a channel demodulator for detecting whether each channel comprises a band energy and for searching the channel comprising the band energy.

10. The broadcast signal receiver according to claim 8, further comprising:
an identifying unit for identifying whether at least one of the broadcast channels is authorized for viewing,
wherein the controller is arranged to receive information regarding the at least one of the broadcast channels from the identifying unit.

11. The broadcast signal receiver according to claim 10, wherein the controller is arranged to control the UI generating unit to show data in the second display block, based on EPG information, regarding a changing procedure for changing the non-viewable channel to the viewable channel.

12. The broadcast signal receiver according to any one of claims 7 to 11, further comprising
a user input unit for selecting at least one of the viewable channels displayed in the channel information menu,
wherein the controller is arranged to change a channel into the selected viewable channel through the user input unit.
